# EUROPEAN PATENT APPLICATION

(11) **EP 1 058 185 A1**
(43) Date of publication of application: **06.12.2000**
(21) Application number: 99110486.0
(22) Date of filing: 31.05.1999
(51) Int. Cl.: G06F 7/544

(54) **A multiply and accumulate apparatus and a method thereof**

(71) Applicant: MOTOROLA, INC., Schaumburg, IL 60196 (US)
(72) Inventor: Salant, Yoram, Rosh Haain 40800 (IL); Shapiro, Eli, Hedera 38204 (IL); Sivan, Noam, Ganey-Tikva 55900 (IL); Yosseff, Ronen, Petach Tikva 49581 (IL)
(74) Representative: Richardt, Markus Albert

(57) **Abstract**

A method for performing multiply and accumulate operations and for providing a final result, the method comprising of the steps of performing a multiply and accumulate operation and producing an intermediate result; setting a saturation flag, if an overflow occurred; storing the intermediate result in the accumulator register; jumping to the first step if these is no need to provide a final result; checking the saturation flag and providing a final result, the final result is determined by the content of the saturation flag.

An multiply and accumulate apparatus comprising of a data register file, the data register file further comprising of an accumulator registe; a multiply and accumulate unit, for receiving operands that are stored within the data register file, performing multiply and accumulate operations and providing an intermediate result; wherein the intermediate result is stored within the accumulator register; a saturation detector for checking whether the intermediate result overflowed, and for setting a flag within the data register file, accordingly ; a limiter, for providing a final result; and a saturation register, for storing and providing a predetermined value.

## Description

### FIELD OF THE INVENTION

The present invention relates generally to a pipelined multiply and accumulate apparatus and method thereof, and especially to a method for accelerating the stage of determining whether an intermediate result overflowed, and sending a final result to memory accordingly.

### BACKGROUND OF THE INVENTION

Digital signal processors (DSP) are well known to include internal memory bank, data and address register files, at least one address generation unit, a peripheral device interface, internal data buses, a program unit, and at least one data arithmetic logic unit (DALU). The DALU generally further comprises a multiply accumulate unit (MAC).

DSPs provide high-speed execution of numerically intensive applications such as digital filtering applications. As is known, digital filtering applications typically include a plurality of multiply and accumulate steps to achieve the desired digital filter. The MAC may execute a significant number of the multiply and accumulate steps in order to complete a single filtering function.

The MAC is coupled to an accumulator register, which receives intermediate results from the MAC and provides the intermediate results back to the MAC for the additional multiply and accumulation steps.

The accumulator register can be implemented within the DALU and can also be implemented within the data register file. Due to hardware constraints, the accumulator register has a fixed bit size. For example, in a Motorola DSP 56300, the accumulator register is 56 bits wide.

In the DSP, the data buses also have a fixed bit size, which typically does not match the bit capacity of the data accumulator. The width of the internal memory banks of the DSP and external data banks which are coupled to the ALU usually are smaller then the width of the accumulator register. For example, the X data bus and Y data bus of the Motorola DSP 56300 arc 24 bits wide.

Therefore, the accumulator register is segregated into various portions, a first portion serves as an overflow portion while a second portion stores a portion of an operand, and is adapted to provide a final result to the data bus and to the memory bank coupled to the data bus. The segregation of these portions and the relationship of the segregation of the portions to one another allow intermediate calculations to exceed the size of a valid result in the second portion. An overflow of this nature is generally known as a saturation of a result.

For example, when a DSP uses a fractional data representation, the accumulator register can have a Z-bit first portion for the Z most significant bits of an operand, a Q-bit second portion for storing Q sign extension bits, and a W-bit third portion for storing the W least significant bits of the operand, whereas Z is the width of the data bus which is used to couple the DALU to internal memory modules. The second portion is often referred to as the fractional portion.

Usually the most significant bit of the first portion and all the extension bits are equal "1" if the operand, stored within the accumulator register, is positive and are equal "0" if the operand is negative. When an overflow occurs, some of the extension bits are changed; thus an overflow can be detected by checking the extension bits and the MSB of the operand. (See: Motorola DSP 56300 Family Manual, pg. 3-2 - 3-14). Other DSPs, however, may detect overflows in a different manner. For example, an overflow can occur when an intermediate result exceeds a predetermined threshold. The overflow can be detected by comparing the intermediate result to that threshold, using a comparator.

When a result overflows, a default value is sent from the DALU to the data bus. Usually there are two saturation thresholds values which represent an upper and a lower boundaries of a domain in which the result is regarded as valid. For example, if the first portion is 24 bits wide than an upper boundary is $7FFFFF and a lower boundary is $800000. The first saturation threshold is $7FFFFF and the second saturation threshold is $800000. When an intermediate result overflows, either one of the saturation thresholds or the intermediate result is sent to the accumulator register. In Motorola DSP 56300, the user can select whether to send to the accumulator register the intermediate result or a default value by setting a bit within a status register. (See: Motorola DSP 56300 Family Manual, pg. 3-2 - 3-14).

The sizes of the first and second portion of the accumulator register are determined by the hardware used and thus are not programmable by the user of the DSP. Thus, the programmer must develop instructions that perform within the limits defined by the DSP architecture without unduly limiting the performance of the DSP.

A final result is written to a memory bank, under the control of the DSP core. Usually an instruction such as a MOVE instruction cause the accumulator register to provide a final result to be sent to the data bus and written to a memory bank. The process of fetching a intermediate result from the accumulator register, and providing a final result to a memory bank involves several steps: checking whether an intermediate result overflows; sending the final result to the data bus, the final result either being a portion of the intermediate result or a predetermined value; driving the final result, via the data bus, to the memory bank and writing the final result within it. The final result can also be scaled upwards or downwards, thus adding another step to the process.

A premium is placed on execution speed for processing data, especially DSPs. Therefore, there is a need to write the final result to the memory bank in a fast manner. A premium is also placed on the DSP ability to access large memory banks. The execution speed of the step of driving a final result to a memory bank and writing the result within the memory bank depends on the memory bank size. Larger memory banks decrease the execution speed, and thus limiting the operative frequency of the DSP. A common technique that improves the execution speed is using relatively larger drivers for driving more electric charge from the DSP to the memory, but this solution results in high power consumption, which is unacceptable, and also can improve the execution speed in a quite limited manner.

It would be desirable to increase the execution speed for processing data, and especially to increase the execution speed for processing data without limiting the access to large memory banks.

### BRIEF DESCRIPTION OF THE DRAWINGS

While the invention is pointed out with particularity in the appended claims, other features of the invention are disclosed by the following detailed description taken in conjunction with the accompanying drawings, in which:
FIG. 1 is block diagram of a digital signal processor;
FIG. 2 is a block diagram of an embodiment a multiply and accumulate circuit, according to an embodiment of the invention;
FIG. 3 is a schematic example of a saturation detector coupled to an accumulator register, according to an embodiment of the invention;
FIG. 4 is a schematic example of a saturation detector coupled to an accumulator register, according to another embodiment of the invention;
FIG. 5 illustrates a pipeline execution method that is used with the DSP core;
FIG. 6 is a schematic diagram of a multiplexing unit 404 within shifter/limiter 40, according to preferred embodiment of the invention; and
FIG. 7 illustrates in flow chart form, in accordance with the present invention.

### DESCRIPTION OF THE PREFERRED EMBODIMENT

It should be noted that the particular terms and expressions employed and the particular structural and operational details disclosed in the detailed description and accompanying drawings are for illustrative purposes only and are not intended to in any way limit the scope of the invention as described in the appended claims.

Generally, the present invention provides a method and apparatus for a data arithmetic logic unit having a pipelined architecture. The first step of checking whether an intermediate result overflows is preformed in a first clock cycle, while the other steps of the process are performed in a second clock cycle. Preferably, if an intermediate result overflows, a flag is set during the first clock cycle. This flag is checked during the second clock cycle.

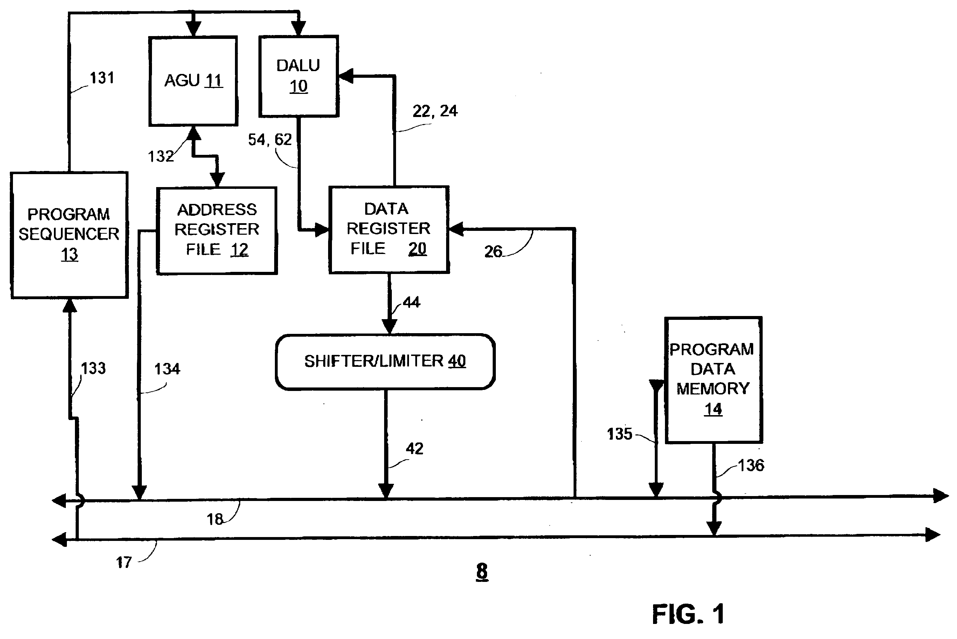

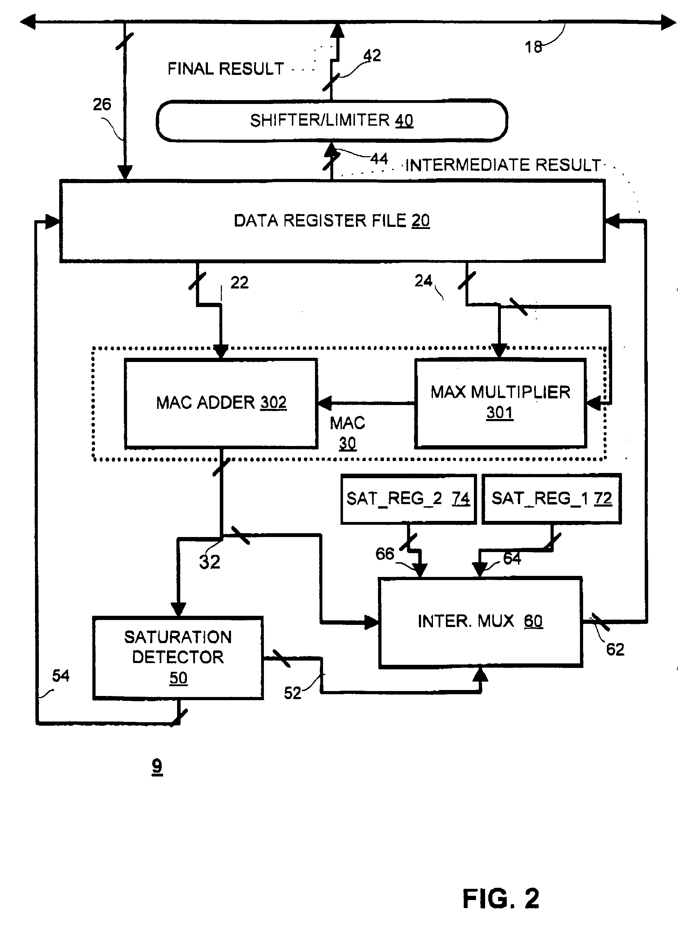

Referring to FIG. 1, an embodiment of a DSP 8 is illustrated. The overall operation of a DSP is not readily germane to the present application. Thus, the overall operation of a DSP will only be described to further illustrate the operations of the present invention. DSP 8 has an address register file 12, a program sequencer 13, data register file 20, address arithmetic logic unit (i.e.- AGU) 11, a data arithmetic logic unit (DALU) 10, a shifter/limiter 40 and internal memory module 14. AGU 30 is coupled to address register file 12 via bus 132. DALU 10 is coupled to data register file 20 via buses 22,24 54 and 62, as explained in further detailed in FIG. 2. Program sequencer 13 is coupled via instruction bus 131 to the AGU 11 and DALU 10.

DSP 8 further includes data bus 18 and program bus 17. Program bus 17 is coupled to program sequencer 13 via bus 133 and to internal memory 20 via bus 136. Data buses 18 is coupled to address register file 12 via bus 134, to data register file 20 via bus 26, to shifter/limiter 40 via bus 42 and to internal memory module 14 via bus 135. AGU 11 is coupled to address register file 12 via bus 132. Data register file 20 is coupled via bus 44 to shifter/limiter 40.

Internal data module 14 stores instructions, to be executed by DALU 10 and AGU 11, and data, to be provided to DALU 10. Program sequencer 13 receives instructions, stored within internal memory module 14, via buses 133, 17 and 136 and provides the instructions to AGU 11 and DALU 20. AGU 11 provides the address of the data/instructions to be fetched from internal memory module 14. DALU 10 performs arithmetic and logic operations on data provided by registers of data register file 20 and stored the results of these operations in a register within data register file 20. The data within the data register file can be written to internal memory module 14, via shifter/limiter 40 and buses 44, 42 18 and 135.

DSP 8 can comprise of a plurality of DALU and a plurality of AGUs.

FIG. 2 illustrates a multiply and accumulate circuit 9, comprising of DALU 10, data register file 20, and shifter/limiter 40. DALU 10 is coupled to a data register file 20, data register file 20 is coupled to a shifter/limiter 40 and to a data bus 18. DALU 10 comprises of: a MAC unit 30; a saturation detector 50, for detecting overflows; two saturation registers 72 and 74, for storing two default values, a default value replaces a result which overflows; and a multiplexer for selecting either the result or one of the two default values, and for providing the selected values to the accumulator register within data register file 20. As indicated by dashed line MAC 30 comprises of a MAC adder 302 and a MAC multiplier 301, the MAC adder 302 is coupled to MAC multiplier 301.

Data register file 20 comprises of a plurality of data registers D1-D15 (not shown). Conveniently, each one of registers D1-D15 can be used as an accumulator register. Preferably, the accumulator register is defined by software. For example, the instruction MAC D1, D2, D3 will cause the DSP to multiply two operands which are stored in registers D1 and D2, and to add the product to the content of D3, whereas this sum is stored in register D3. Thus D3 is used as an accumulator register.

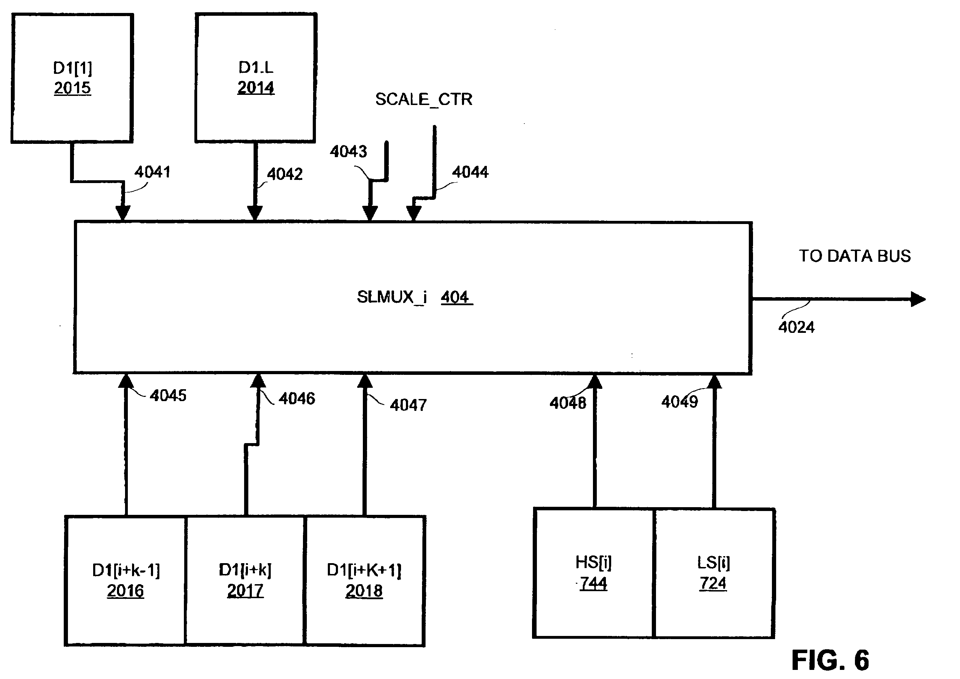

Data register file 20 is coupled to shifler/limiter 40 by bus 44, to data bus 18 by bus 26, to saturation detector 50 by line 54, to MAC 30 by buses 22 and 24, and to multiplexer 60 by bus 62. MAC 30 is coupled to multiplexer 60 and to saturation detector 50 by bus 32. Multiplexer 60 is coupled to saturation detector by line 52 and to first and second saturation registers 72 and 74 by buses 64 and 66 accordingly. Saturation detector 50 further receives, via line 82, a signal ISMODE from the DSP core. ISMODE indicate whether to replace an intermediate result which overflowed by a default. Conveniently, saturation detector 50 and shifter/limiter receive, via bus 84, two signals commonly referred to as SCALE_CTR (shown in FIG. 6), from the DSP core (not shown) for determining whether the final result is shifted, and if so-whether it is shifted upwards or downwards. Saturation detector 50 may also be coupled to first and second saturation registers 72 and 74, for receiving two predetermined values (i.e.- saturation threshold) that are stored within these registers.

For convenience of explanation it is assumed that buses 44, 22, 24, 32, 62, 64 and 64 are 40-bit wide, bus 42 and data bus 18 are 16-bit wide, that the DSP uses a fractional data representation and that each of data registers D0-D15 has a first portion for storing 8 sign extension bits, followed by a second portion for storing an operand of up to 32 bits. A plurality of saturation flags SFLAG0 - SFLAG15 are associated with data registers D0 - D15. If the accumulator register stores an intermediate result that overflowed, the saturation flag associated to this register is set.

The saturation flag is updated during the first step of checking whether the intermediate result overflows. Preferably, the SFLAG is stored within the accumulator register. For example, and as shown in FIG. 2 second data register D1 201 has a flag portion D1.L 2014, for storing SFLAG1.

Usually, the final result is provided by a portion of the accumulator register. This portion is sent, via shifter/limiter 40 to memory bus 18. Usually, the final result is provided by a first operand portion of the accumulator register, but if the result is either scaled up or down, some of the final result bits are provided from other portions of the accumulator register. For example, if the accumulator register has 40 bits plus an additional bit for storing SFLAG, and the accumulator register has a sign extension portion, a first operand portion and a second operand portion, and the sign extension portion is eight bits wide, the first and second operand portions are each 16 bits wide, then if shifter/limiter performs a scaled up (down) operation then the final result is provided by the eight till twenty third bits (tenth to the twenty fifth bits) of the accumulator register.

In operation, two registers out of the file register file send two 16- bit operands to MAC multiplier 301. The product of this multiplication is sent to MAC adder 302, which also received the content of the accumulator register. MAC adder 302 provides an intermediate result by summing together the product provided by MAC multiplier 301 and the content of the accumulator register. The intermediate result is routed to saturation detector 50 and to multiplexer 60 via bus 32. In general, if the intermediate result does not exceed either the first or second saturation thresholds, it is passed, via inter MUX 60, to the accumulator register for temporary storage. A saturation threshold replaces the intermediate result if it exceeds it and if the ISMODE signal indicates that there is a need to update the intermediate result. The intermediate result stored in the accumulator register is either routed to shifter/limiter 40 or back to MAC adder 302.

Saturation detector 50 checks the intermediate result, and if the intermediate result exceeded one of the saturation threshold values, it sets the SFLAG associated to the accumulator register, else, it resets SFLAG. Furthermore, the saturation detector sends multiplexer 60 a control signal, via bus 52, which determines whether multiplexer will pass the intermediate result, or one of the saturation thresholds. The MSB of the intermediate result is used to determine which of the saturation threshold is passed to the accumulator register.

Once the DALU 10 has performed the desired multiply accumulate function; the DSP core controls the accumulator register to output a final result. The final result is then utilized by the DSP core, as determined by the overall function being executed.

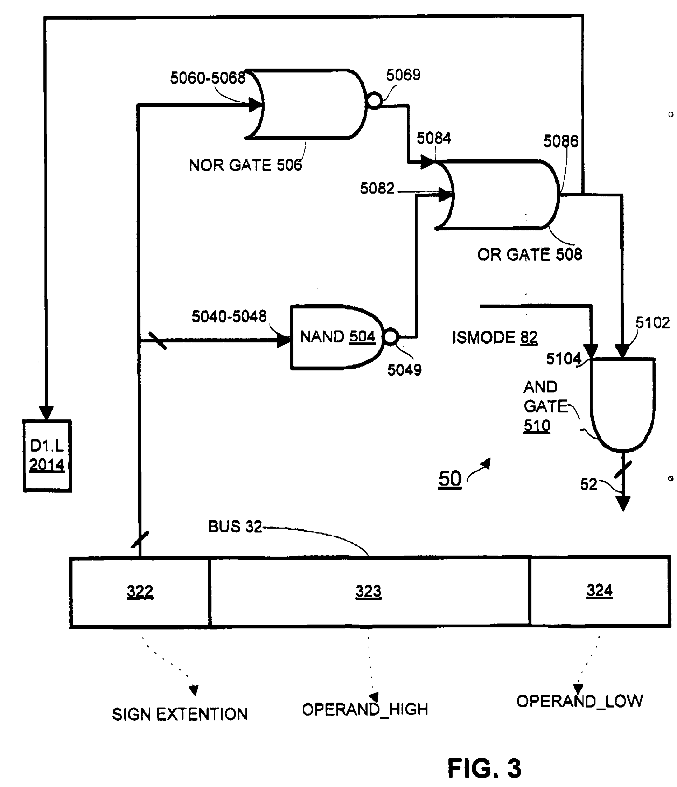

FIG. 3 is a schematic example of a saturation detector, according to an embodiment of the invention. MAC adder 302 is coupled via bus 32 to saturation detector 50 and multiplexer 60. Conveniently, bus 32 is 40 bits wide. Bus 32 has three portions. The first bus portion 322 of bus 32 provides a plurality of extension bits, the second bus portion 323 provides the high part (the most significant bits) of an operand and the third bus portion 324 provides the low part (the least significant bits) of that operand. Conveniently, the first bus portion 322 is eight bits wide, the second and third bus portion 323 and 324 are 16 bits wide.

Saturation detector 50 is comprised of a logic NOR gate (i.e.- NOR) 506, a logic NAND gate (i.e. - NAND) 504, a logic OR gate (i.e.- OR) 508 and a logic AND gate (i.e.- AND) 510. NOR 506 has nine inputs 5060 - 5068 and output 5069. NAND 504 has nine inputs 5040 - 5048 and output 5049. AND 510 has two inputs 5102, 5104 and output 52. OR 506 has two inputs 5082, 5084 and output 5086. Inputs 5060 - 5068 of NOR 506 and inputs 5040 - 5048 of NAND 504 are coupled to the first bus portion 322 and to the MSB of the second bus portion 323. Outputs 5049 and 5069 of NAND 504 and OR 506 are coupled to inputs 5082 and 5084 of OR 508. Output 5086 of OR 508 is coupled to input 5102 of AND 510 and to bus 54, for either setting or resetting the saturation flag that is associated to the accumulator register. Input 5104 of AND 510 is coupled to DSP core (not shown) for receiving control signal ISMODE 82. If an overflow occurs either NAND 504 or NOR 506 send a high level (i.e.- "1") output signal to OR 508 via inputs 5082 and 5084. OR 508 sends a high level output signal, via output 5086 to input 5102 of AND 52 and also sends the signal, via bus 54, thus setting SFLAG 1. If ISMODE 82 is high then AND 52 sends a high level output signal to MUX 60, which causes MUX 60 to send to the accumulator register either one of the saturation thresholds provided to MUX 60 by first and second saturation registers 72 and 74.

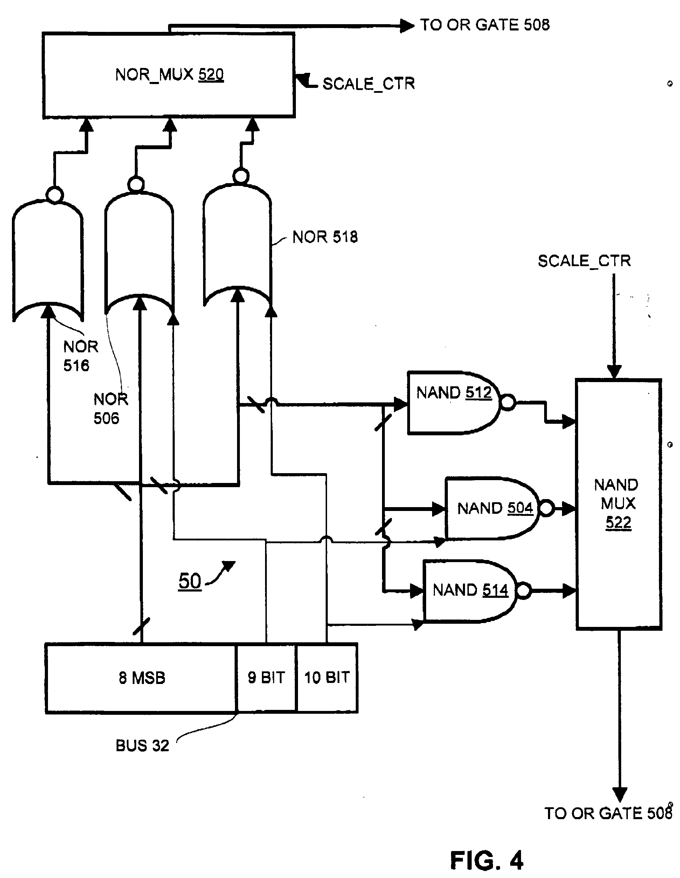

FIG. 4 is a schematic example of a saturation detector coupled to an accumulator register, according to another embodiment of the invention. The saturation detector of FIG. 3 is analogues to the saturation detector of FIG. 2 but has additional logic, for checking a variable number of bits of bus 32, in order to determine whether an overflow occurred. Saturation detector 50 is comprised of three NOR gates 518, 506 and 516, three NAND gates 514, 504 and 512, a first multiplexer (i.e.- NAND MUX) 522 and a second multiplexer (i.e.- NOR MUX) 520. NOR gates 516 and 518 are analogues to NOR gate 506, but NOR 516 has eight inputs, and NOR 518 has ten inputs. NAND gates 514 and 512 are analogues to NAND 504, but NAND 512 has eight inputs, and NAND 514 has ten inputs.

Scaling upwards or downwards causes the number of sign extension bits to increase or decrease accordingly. For example, first portion 322 of bus 32 is 8 bits wide and each of second and third portions of bus 32 are 16 bits wide. A 16-bit operand is to be sent from shifter/limiter 40 to data bus 18. If the data is not scaled, the second portion 323 (i.e.- the ninth bit to the twenty fourth bit of bus 32) of bus 32 provide the 16-bit operand, and the first to ninth bits of bus 32 are provided to the nine inputs of NAND 504 and NOR 506 and are checked in order to determine whether a overflow has occurred. If the data is scaled up by a bit then the tenth till twenty fifth bits of bus 32 provide the 16-bit operand. Thus, the first to tenth bits of bus 32 are provided to the ten inputs of NOR 518 and NAND 514 and are checked in order to determine whether a overflow occurred. If the data is scaled down by a bit then the eighth till twenty second bit of bus 32 provide the 16-bit operand. Thus, the first to eighth bits of bus 32 are provided to the eight inputs of NAND 512 and NOR 506 and are checked in order to determine whether an overflow occurred. The outputs of NANDs 504, 512 and 512 are coupled to the inputs of NAND_MUX 522, and the control signal SCALE_CTR is provided to the control inputs of NAND_MUX 522. The outputs of NORS 506, 516 and 518 are coupled to the inputs of NOR_MUX 520, and the control signal SCALE_CTR is provided to the control inputs of NOR_MUX 520. The output of NAND_MUX 522 and NOR_MUX 520 are provided to inputs 5082 and 5084 of OR 508 accordingly. Thus, NAND 504 and NOR 506 are selected if there is no scaling, NOR 516 and NAND 512 are selected when a scaling upwards operation is performed, and NOR 518 and NAND 514 are selected when a scaling downward operation is performed.

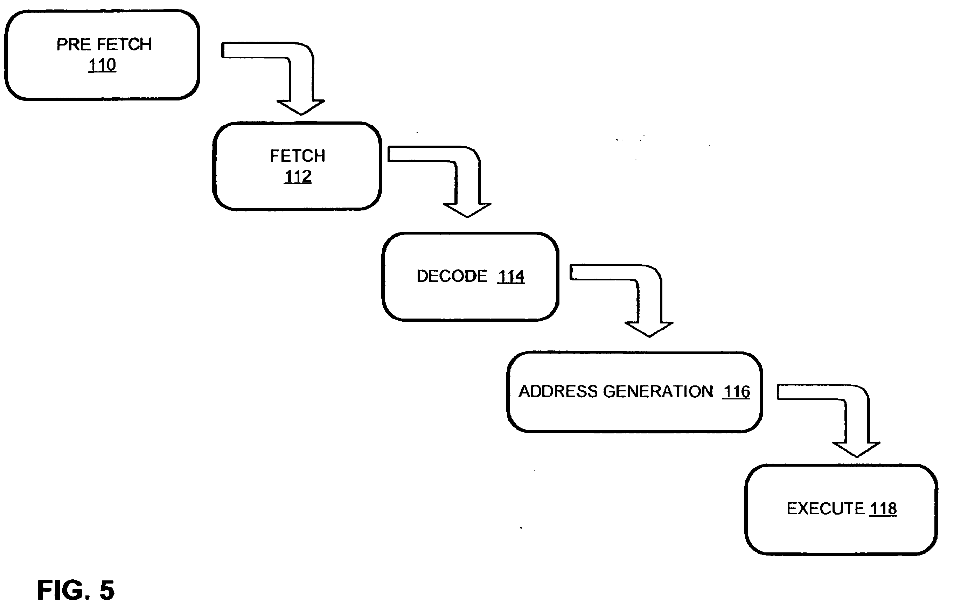

FIG. 5 illustrates a pipeline execution method that is used with the DSP core. The pipelined method includes the execution stages of program pre-fetch 110, program fetch 112, decode 114, address generation 116 and execute 118. Table 2 illustrates the various execution stage which are involved in performing a multiply and accumulate operation (referred to as ADD in table 1), which is followed by writing a result to the memory (referred to as MOVE in table 1). The SFLAG is set during execute stage 118 of ADD while the result is written to the memory in the execute stage of MOVE.

**TABLE 1**

| Prefetch | Fetch | Decode | Address | Execute | comments |
|---|---|---|---|---|---|
| ADD | - | - | - | - | |
| MOVE | ADD | - | - | - | |
| - | MOVE | ADD | - | - | |
| - | - | MOVE | ADD | - | |
| - | - | - | MOVE | ADD | add, check overflow, |
| | | | | | set/reset SFLAG |
| - | - | - | - | MOVE | move to memory |

FIG. 6 is a schematic diagram of a multiplexing unit 404 within shifter/limiter 40, according to preferred embodiment of the invention. Bus 42 from shifter/limiter 40 is 16 bit wide; therefor shifter/limiter 40 comprises of 16 multiplexing units. Multiplexing unit 404 is analogues to the each of the other 15 multiplexing units (not shown in FIG. 6). Two types of control signals control multiplexer unit 404. The first type of control signal (SCALE_CTR) determines whether to scale, and if so whether to scale upwards or downwards. For convenience of explanation it is assumed that shifter/limiter shifts either upwards or downwards by a bit, and that data register D1 is the accumulator register. The second type of control signals (SFLAG, D1[1]) determine whether an overflow occurred, and if so - which of the two saturation threshold to send as a final result. D1[1] is the most significant bit of the first portion of the accumulator register. D1[1] indicates whether the final result is positive or negative. If a overflow occurred and D1[1]=0, then if the final result is positive, the high threshold is sent from shifter/limiter 40 to data bus 18. If a overflow occurred and D1[1]=1, then if the final result is negative, the lower threshold is sent from shifter/limiter 40 to data bus 18.

Multiplexing unit 404 has control inputs 4041, 4042, 4043 and 4044, for receiving D1[1], SFLAG1, SCALE_CTR; has inputs 4045-4047 for receiving three data bits of the final result; input 4048 for receiving a data bit of the higher saturation threshold; input 4049 for receiving a data bit of the lower saturation threshold; and output 4024. The sixteen outputs of the 16 multiplexing units within shifter/limiter 40 form bus 42.

Multiplexing unit 404 provides the i'th bit out of 16 bits provided to data bus 18. When no scaling is applied, multiplexing unit 404 selects the i'th bit of either the upper saturation threshold, the lower saturation threshold or final result D1[i+k], k being the number of bits within the first portion and saturation portions of the accumulator register. The scaling upwards/downwards operation is implemented by selecting the (i-1)'th/(i+1)'th bit of the intermediate result. Usually, the saturation thresholds are not scaled. Scaling by J will result in the selection of the (i-j)'th/(i+j)'th bit.

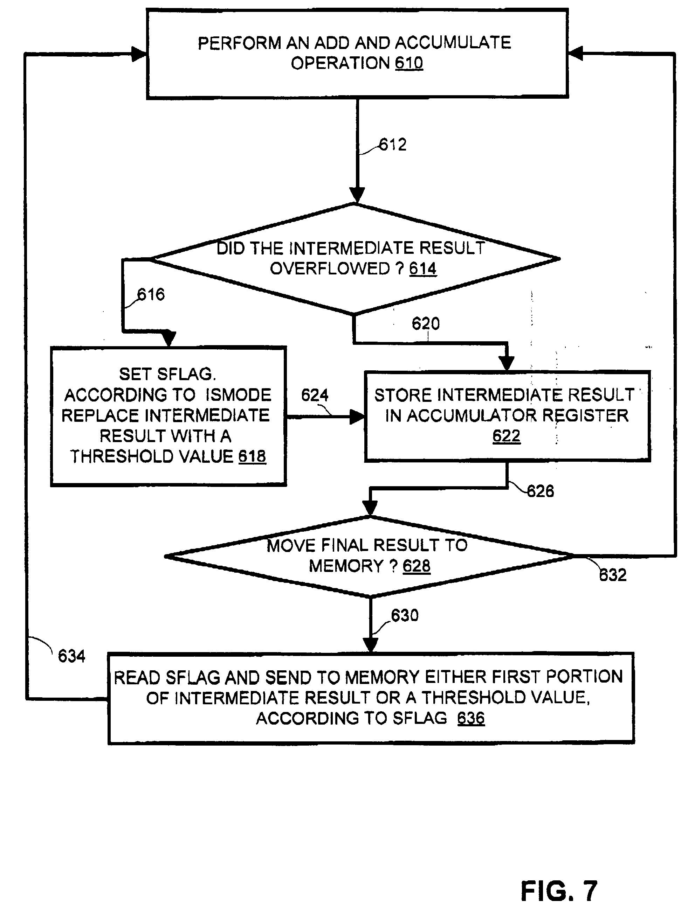

FIG. 7 is a flow chart of a method 600 for performing multiply and accumulate operations, and sending a final result to a data bus, according to a preferred embodiment of the invention. Boxes 610, 614, 618, and 622 represent steps which are performed during a first phase , whereas boxes 628 and 636 are performed during a consecutive phase. Preferably each phase is executed during a single clock cycle. Method 600 comprises of the following steps :

Performing a multiply and accumulate operation and producing an intermediate result, during step 610. For example, the instruction MAC D1, D2, D3 will cause the DSP to multiply two operands which are stored in registers D1 and D2, and to add the product to the content of D3, whereas this sum is stored in register D3. Thus D3 is used as an accumulator register. As indicated by paths 616 and 620, step 614 is followed by steps 618 and 622 accordingly.

Setting a saturation flag (SFLAG) indicating that an overflow occurred, during step 618. If DSP works in a first mode (indicated by ISMODE) replacing the intermediate result with a saturation threshold value. As indicated by path 624 step 618 is followed by step 622.

Storing the intermediate result in the accumulator register, during step 622, if the intermediate result did not overflow. As indicated by path 626 step 622 is followed by step 628.

Checking whether the intermediate result overflowed, during step 614. The intermediate result has a first portion that can be provided as a final result, and has a sign extension portion. The comparison can involve the comparison to two saturation thresholds, or even checking the sign portion and the first portion of the intermediate result. As indicated by path 612, step 610 is followed by step 614.

Checking if there is a need to provide a final result, during step 628. As indicated by path 632, if the answer is NO, step 628 is followed by step 610.As indicated by path 630, step 280 is followed by step 636.

Checking whether SFLAG indicates that a overflow occurred. If the answer is NO, outputting a portion of the intermediate result. Preferably this portion is written to a memory module. If the answer is YES, checking the sign of the intermediate result and replacing the intermediate result by a saturation threshold value having the same sign. As indicated by path 634 step 636 is followed by step 610.

Thus, there has been described herein an embodiment including at least one preferred embodiment of an improved apparatus for performing multiply and accumulate operation and a method for performing multiply and accumulate operations, and sending a final result to a data bus.

It will be apparent to those skilled in the art that the disclosed subject matter may be modified in numerous ways and may assume many embodiments other than the preferred form specifically set out and described above.

Accordingly, the above disclosed subject matter is to be considered illustrative and not restrictive, and to the maximum extent allowed by law, it is intended by the appended claims to cover all such modifications and other embodiments which fall within the true spirit and scope of the present invention. The scope of the invention is to be determined by the broadest permissible interpretation of the following claims and their equivalents rather than the foregoing detailed description.

## Claims

1. A multiply and accumulate apparatus comprising :
a data register file, the data register file further comprising of an accumulator register ; wherein the accumulator register has a first portion adapted to provide a final result;
a multiply and accumulate unit, coupled to the data register file, for receiving operands that are stored within the data register file, performing multiply and accumulate operations and providing an intermediate result; wherein the intermediate result is stored within the accumulator register;
a saturation detector, coupled to the multiply and accumulate unit and to the data register file, for checking whether the intermediate result overflowed, and for setting a flag within the data register file, accordingly ;
a limiter, coupled to the data register file, for providing a final result;
a saturation register, coupled to the limiter, for storing and providing a predetermined value; and
wherein if the flag indicates that the intermediate result overflowed, the final result is provided by the saturation register, else, the final result is provided by the first portion of the intermediate result.

2. The multiply and accumulate apparatus of claim 1 wherein the data register file comprises of a plurality of data registers;
wherein, each of the data registers can function as an accumulator register; and
wherein a saturation flag is associated to each of the data register files.

3. The multiply and accumulate apparatus of claim 2 wherein a data register comprises of a flag portion, for storing the saturation flag associated with the data register.

4. The multiply and accumulate apparatus of claim 3 wherein the accumulator register has a first portion for storing a plurality of sign extension bits;
wherein the saturation detector is coupled to the multiply and accumulate unit by a bus; wherein the bus has a first portion which is adapted to provide sign extension bits, and a second portion which is coupled to the first portion of the accumulator register;
wherein the saturation detector comprises of a NOR logic gate, a NAND logic gate, an OR logic gate; wherein each of NOR logic gate, NAND logic gate, OR logic gate has a plurality of inputs and an output;
wherein the inputs of the NAND logic gate and the NOR logic gate are coupled to the first portion of the bus;
wherein the outputs of the NAND logic gate and NOR logic gate are coupled to the input of the OR logic gate; and
wherein the saturation flag is provided by the output of the OR logic gate.

5. The multiply and accumulate apparatus of claim 1 further comprising a multiplexer;
wherein the multiplexer is coupled to the saturation register, the multiply and accumulate unit, to the data file register, the saturation detector; and
wherein the multiplexer couples the saturation register to the accumulator register when an intermediate result overflowed, else, the multiplexer couples the multiply and accumulate unit to the accumulator register.

6. The multiply and accumulate apparatus of claim 2 further comprising a second saturation register;
wherein the second saturation register is coupled to the shifter/limiter;
wherein the intermediate result is bounded between two saturation thresholds;
wherein the saturation register stores a first predetermined value, to be provided as the final result when the intermediate result exceeds a first saturation threshold;
wherein the second saturation register stores a second predetermined value, to be provided as the final result when the intermediate result exceeds a second saturation threshold.

7. A method for performing multiply and accumulate operations, the method comprising of the steps of :
performing a multiply and accumulate operation and producing an intermediate result; wherein the intermediate result has a first portion to be provided as a final result;
setting a saturation flag, if the intermediate result overflowed;
storing the intermediate result in the accumulator register;
jumping to the step of performing a multiply and accumulate operation, if these is no need to provide a final result;
checking the saturation flag and providing a final result, when there is a need to provide a final result; wherein if the saturation flag is set, the final result equals a predetermined value, else the final result equals the first portion of the intermediate result.

8. The method of claim 7 wherein the method is executed in two phases;
wherein executing the steps of performing a multiply and accumulate operation, setting a saturation flag, storing the intermediate result and the step of jumping, during a first phase; and
performing the step of checking the saturation flag during a second phase.

9. The method of claim 8 wherein each stage lasts a single clock cycle.
